# EUROPEAN PATENT SPECIFICATION

(11) **EP 2 336 474 B1**
(45) Date of publication and mention of the grant of the patent: **14.11.2012**
(21) Application number: 10195527.6
(22) Date of filing: 16.12.2010
(51) Int. Cl.: E06B 3/984, B25B 5/10, B25B 5/14, A47G 1/10

(54) **A clip**
Klemme
Pince

(30) Priority: 16.12.2009 IT TV20090233
(43) Date of publication of application: 22.06.2011
(73) Proprietor: OTLAV S.p.A, 31025 Santa Lucia di Piave (TV) (IT)
(72) Inventor: Piccolo, Lorenzo, 31040, Giavera del Montello (IT)
(74) Representative: Jorio, Paolo

(56) References cited:
- EP-A2- 0 432 773
- WO-A1-03/021114

## Description

The present invention relates to a clip for reciprocally clamping components of frames for pictures, doors, windows or the like.

Clips structured to reciprocally clamp components, for example panels used to make picture frames or frames for doors or windows, so that the surfaces of the panels are temporarily abutted and thus firmly joined together are known in the prior art.

In particular, European patent EP-0432773 describes a metal clip that is structured so as to reciprocally secure two panels of wood that make up the frame of a door in correspondence with an angular joint of said frame.

In this example, the clip essentially comprises: an elongated rectangular base plate, which extends along a longitudinal axis and has a first bent end that acts as a fixed clamping jaw which, in use, is arranged inside a circular seat formed in the side face of a first panel; a mobile clamping jaw coupled to the base plate so as to move along the longitudinal axis and which, in use, is arranged inside a circular seat obtained in the side face of a second panel; and a clamping member capable of moving the mobile jaw along the longitudinal axis towards the fixed jaw so as to reciprocally clamp the first and the second panel.

The mobile clamping jaw is floatingly coupled to an intermediate section of the base plate so as to swivel about an axis that is transverse with respect to the longitudinal axis and slides along said longitudinal axis from and towards the fixed clamping jaw so that its distance from the latter varies, while the clamping member comprises an adjustment screw, which is screwed into a threaded through hole obtained in the second end of the base plate, the distal end of the stem of the screw abutting against the mobile clamping jaw in order to move the latter.

More in detail, the mobile clamping jaw comprises a rectangular plate provided with an upper appendix that is fitted inside a slit obtained in a section of the central plate, and is shaped so as to be able to float with respect to the base plate and at the same time slide along said slit during clamping operations.

Although the structure of the clamp described above is effective in terms of clamping the panels, it is particularly inconvenient in terms of the time required to produce said clip.

In particular, several operations must be performed to manufacture the clip described above, namely: production of the base plate; production of the mobile clamping jaw; production of the slit in the base plate; fitting of the appendix into the slit and shaping of the free end of the appendix to prevent it from coming out, i.e. to prevent the mobile clamping jaw from becoming detached from said slit.

When the operations described above have to be performed to produce a large number of clips this clearly increases production times and thus has a significant impact the on overall cost of production.

Moreover, fitting the clip into the circular seats in the panels can be a relatively complex and time-consuming procedure, since the clamping jaw is floating with respect to the base plate and thus requires specific positioning in order to ensure that it is fitted correctly into the circular seat.

W003021114 describes a clamping device that comprises a base plate made of a rigid non-deformable material with a first end that is bent so as to act as a first fixed clamping jaw and a second end that is bent and supports a clamping screw, which can be tightened manually to act as a second clamping jaw.

The purpose of the present invention is to provide a clip that can be coupled simply and quickly to the panels, with a structure that requires fewer production operations and is thus cheaper to produce while offering the same clamping efficiency as the clips used in the prior art.

The present invention will now be described with reference to the accompanying drawings, illustrating a non-limiting embodiment thereof, in which:
- figure 1 is a perspective view of the clip provided according to the present invention;
- figures 2 and 3 are schematic side elevation views of the clip illustrated in figure 1 with some parts shown as cross-sections and some parts removed for the sake of clarity in two different operating positions;
- figure 4 is a perspective view of the clamp according to a possible alternative embodiment; while
- figures 5 and 6 are schematic side elevation views of the clamp illustrated in figure 4 with some parts shown as cross-sections and some parts removed for the sake of clarity in two different operating positions.

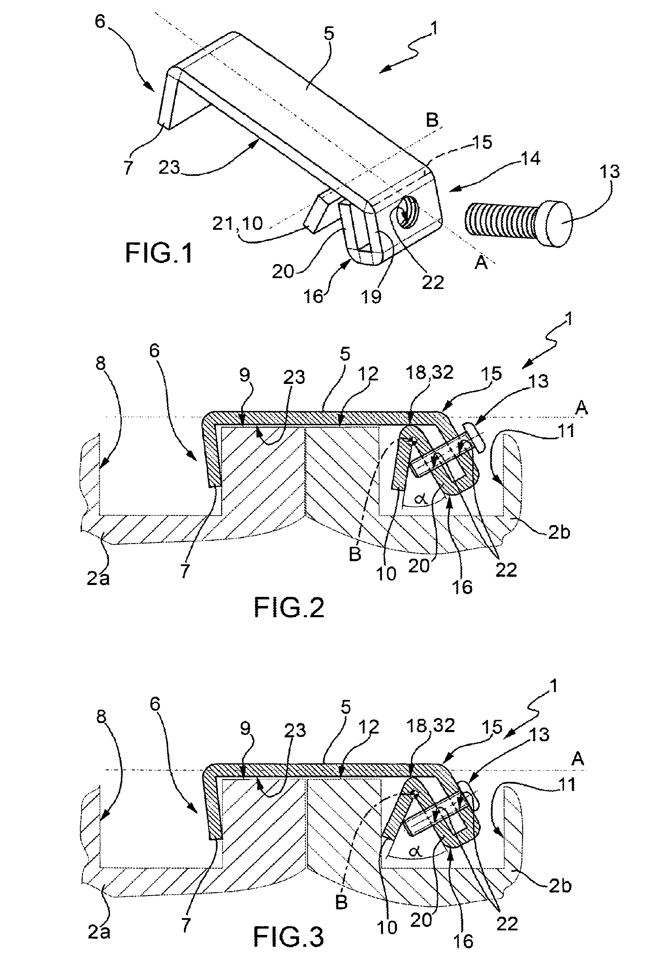

With reference to figures 1, 2 and 3, designated as a whole by number 1 is a clip structured for reciprocally clamping two separate panels 2a, 2b that make up a frame for a door, window, picture or the like.

In particular, the clip 1 is structured so as to reciprocally clamp two panels 2a and 2b which make up a frame, preferably, but not necessarily, in correspondence with an angular joint of said frame, so as to temporarily abut the surfaces of the panels 2a, 2b, thus joining these.

The clip 1 is made of a rigid material, for example a metal material or any other similar material and essentially comprises: a substantially elongated rectangular base plate 5 which extends along a longitudinal axis A and has a first end 6 bent so as to act as a fixed clamping jaw 7 which, in use, is positioned inside a seat 8 formed in the side face 9 of a panel 2a (Figures 2 and 3).

In this example, the first end 6 is bent with respect to the base plate 5 so as to lie in a plane that is substantially transverse with respect to the longitudinal axis A.

The clip 1 also comprises a mobile clamping jaw 10, which is coupled to the base plate 5 so as to at least partially rotate about an axis B transverse to the longitudinal axis A and which, during use, is positioned inside a seat 11 obtained in the side face 12 of the panel 2b to be joined; and a member 13 for the manual regulation of clamping which, in use, exerts a force on the mobile clamping jaw 10 to rotate it about the transverse axis B so as to selectively cause the reciprocal clamping between the two panels 2a,2b.

Unlike the prior art clips, the fixed clamping jaw 7 and the mobile clamping jaw 10 of the clip 1 are made in one piece with the base plate 5 so as to form with the latter a monolithic structure.

In detail, with reference to the example illustrated in figure 1, the base plate 5 is shaped so as to have a second end 14 opposite the first end 6, which is bent in correspondence with three distinct bending lines 15, 16 and 18 so as to respectively form: a first section 19 bent along the bending line 15 so that it lies in a substantially inclined plane with respect to the longitudinal axis A; a second section 20 bent with respect to the first section 19 along the bending line 16 so that it lies in a plane substantially parallel but not coinciding with the plane in which the first section 19 lies; and a third section 21 bent with respect to the second section 20 along the bending line 18 so as to lie in a plane which forms an angle α, with the plane in which said second section 20 lies, to form the mobile clamping jaw 10.

In particular, the transverse axis B is parallel to, or preferably, but not necessarily, coinciding with, the bending line 18 which joins the third section 21 to the second section 20, while the third section 21 corresponds to the mobile clamping jaw 10, which is able to rotate, under the force exerted by the member 13, at least partially about the transverse axis B, between a rest position (figure 2), in which the angle α has a pre-set minimum value, and a series of operative clamping positions in which the angle α progressively increases with respect to the minimum angle until it reaches a maximum clamping value (figure 3).

More in detail, in the rest position, the free end of the third section 21 corresponding to the mobile clamping jaw 10 is arranged at a pre-set minimum distance from the free end of the clamping jaw 7 while, in the various operating positions the free end of the third section 21 is arranged, under the force of the member 13, at shorter distances than said minimum distance.

As regards the member 13, in the example illustrated in figures 1, 2 and 3 this comprises an adjustment screw, the stem of which is screwed inside a pair of coaxial through holes 22 obtained in the first 19 and second section 20.

In this example, illustrated in figure 1, the stem of the adjustment screw is screwed inside at least one of the through holes 22 and the distal end thereof abuts onto a face of the third section 21, opposite the face of the latter that comes to rest on the inner side wall of the seat 11 of the panel 2b.

In the example illustrated in figures 1 and 2, the first 19, second 20 and third section 21 of the second end 14 are shaped so as to have a substantially S-shaped cross-section, wherein the elbow 32 formed by the angled curvature in correspondence with the bending line 18 between the second 20 and the third section 21 abuts onto the lower face 23 of the base plate 5.

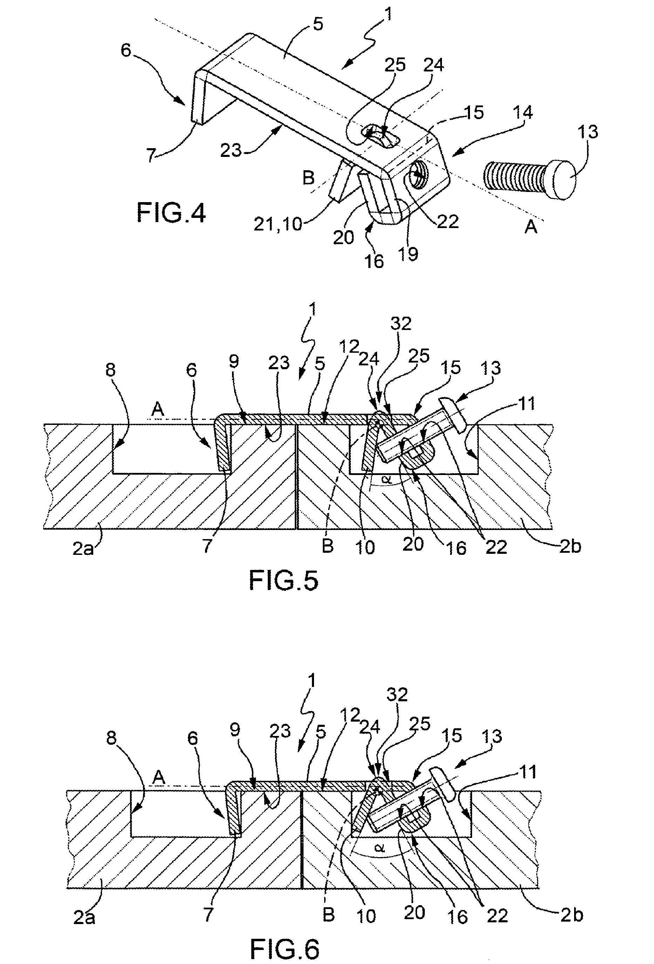

According to a possible alternative embodiment, illustrated in figures 4, 5 and 6, the elbow 32 formed by the angled curvature between the second 20 and the third section 21 is shaped so as to have a reduced width with respect to the width of the second 20 and third section 21 thus forming an appendix 24 bent at an angle, arranged inside a slit 25 which is obtained in the base plate 5 along which it extends parallel to the longitudinal axis A.

In use, the clamping screw is operated so that the distal end of the stem does not exert any force on the clamping jaw 10 and the latter is maintained in the rest position. In this condition, the clip 1 can be coupled to the panels 2a and 2b so that the clamping jaws 7 and 10 are arranged inside the respective seats 8 and 11 (figure 2 or figure 5).

The clip 1 is clamped onto the panels 2a and 2b by tightening the adjustment screw.

In particular, in this phase, when the screw is tightened, the distal end of the screw stem exerts a force on the clamping jaw 10 which determines a permanent plastic deformation of the elbow 32 and causes the partial rotation thereof about the transverse axis B

(figure 3 or 6).

The rotation of the clamping jaw 10 determines a reduction in the distance between said clamping jaw 10 and the fixed clamping jaw 7 which causes the reciprocal clamping between the two panels 2a and 2b.

Furthermore, it is important to note that in order to cause an elastic deformation of the elbow 32 during the operation of the member 13, the clip 1 may conveniently be made of spring steel or another similar material.

The advantages deriving from the present invention are apparent. Since the clamping jaws and the base plate are made in a single piece to form a monolithic structure the number of operations that are needed to make said clip are reduced to a minimum thus lowering the production costs thereof.

Finally, it is clear that modifications and variations may be made to the clip described and illustrated herein without departing from the scope of the present invention, as set forth in the claims.

## Claims

1. A clip (1) for reciprocal clamping of two components (2a,2b) of a frame for doors or windows or picture frames;
said clip (1) comprising:
- a base plate (5) which extends along a longitudinal axis (A) and has a first end (6) bent so as to act as a first clamping jaw (7) able, in use, to be positioned inside a seat (8) formed in a first component (2a) of said frame;
- a second clamping jaw (10), which is coupled to the base plate (5) so that it can be rotated about an axis (B) transverse to said longitudinal axis (A) and is able, in use, to be positioned inside a seat (11) formed in a second component (2b) of said frame; and
- means for manual regulation of clamping (13) which exert a force on said second clamping jaw (10) to rotate it about said transverse axis (B) so as to move the second clamping jaw (10) closer to the first clamping jaw (7) in a controlled manner in order to selectively cause the reciprocal clamping between the first (2a) and the second component (2b);
said clip (1) being **characterised in that** said first clamping jaw (7) and said second clamping jaw (10) are made in one piece with said base plate (5) so as to form with the latter a monolithic structure.

2. The clip as claimed in claim 1, wherein said base plate (5) has a second end (14) opposite said first end (6) bent along three distinct bending lines (15, 16, 18) parallel to said transverse axis (B) and spaced from one another so as to form respectively: a first section (19) bent along a first bending line (15) so that it is positioned on a substantially inclined plane with respect to said longitudinal axis (A); a second section (20) bent with respect to the first section (19) along a second bending line (16) so that it is positioned in a plane substantially parallel but not coinciding with the plane in which said first section (19) lies; and a third section (21) bent with respect to the second section (20) along a third bending line (18) so as to lie in a plane which forms an angle (•) with the plane in which said second section (20) lies.

3. The clip as claimed in claim 2, wherein the transverse axis (B) is parallel to, or coinciding with, said third bending line (18) which joins the third section (21) to the second section (20).

4. The clip as claimed in claims 2 or 3, wherein the third section (21) corresponds to the second clamping jaw (10), which is able to rotate, under the force exerted by said means for manual regulation of clamping (13), about said transverse axis (B), between a rest position, in which said angle (α) has a pre-set minimum value, and a series of operative clamping positions in which said angle (α) progressively increases with respect to the minimum value until it reaches a clamping value.

5. The clip as claimed in any one of the claims from 2 to 4, wherein said means for manual regulation of clamping (13) comprise an adjustment screw having its stem screwed to the inside of at least one of two coaxial through holes (22) obtained in the first (19) and second section (20) so as to allow the end of the screw stem to abut onto a face of the third section (21).

6. The clip as claimed in any one of the claims from 2 to 5, wherein the first (19), second (20) and third section (21) of the second end (14) are shaped so as to have a substantially S-shaped form.

7. The clip as claimed in claim 6, wherein the elbow (32) formed by the angled curvature corresponding to the third bending line (18) between the second (20) and the third section (21) abuts onto the lower face (23) of the base plate (5).

8. The clip as claimed in claim 6, wherein the elbow (32) formed by the angled curvature corresponding to the third bending line (18) between the second (20) and the third section (21) is shaped so as to present a reduced width with respect to the width of the second (20) and third section (21) thus forming an appendix (24) bent at an angle, positioned inside a slit (25) which is obtained in the base plate (5) along which it extends parallel to the longitudinal axis (A).

9. The clip as claimed in any one of the preceding claims made of spring steel or similar materials.

## Patentansprüche

1. Klemme (1) zur wechselseitigen Verspannung von zwei Komponente (2a, 2b) eines Rahmens für Türen oder Fenster oder von Bilderrahmen;
wobei die Klemme (1) ausweist:
- eine Grundplatte (5), die sich entlang einer longitudinalen Achse (A) erstreckt und ein erstes Ende (6) hat, das so gekrümmt ist, dass es als erste Spannbacke (7) fungiert, die in der Lage ist, beim Gebrauch, innerhalb eines Sitzes (8) positioniert zu werden, welcher in einer ersten Komponente (2a) des Rahmens gebildet ist;
- eine zweite Spannbacke (10), die mit der Grundplatte (5) so verbunden ist, dass sie um eine Achse (B) rotierbar ist, die transversal zur Longitudinalachse (A) ist, und die in der Lage ist, beim Gebrauch, innerhalb eines Sitzes (11) positioniert zu werden, welcher in einer zweiten Komponente (2b) des Rahmens gebildet ist; und
- Mittel zur manuellen Einstellung der Verspannung (13), welche eine Kraft auf die zweite Spannbacke (10) ausüben, so dass sie um die transversale Achse (B) rotiert wird, um so die zweite Spannbacke (10) näher an die erste Spannbacke (7) zu bewegen, auf kontrollierte Weise, um selektiv die wechselseitige Verspannung zwischen der ersten (2a) und der zweiten Komponente (2b) zu verursachen;
wobei die Klemme (1) **dadurch gekennzeichnet ist, dass** die erste Spannbacke (7) und die zweite Spannbacke (10) einstückig mit der Grundplatte (5) ausgeführt sind, so dass sie mit letzterer eine monolithische Struktur formen.

2. Die Klemme wie in Anspruch 1 beansprucht, wobei die Grundplatte (5) ein zweites Ende (14) gegenüberliegend des ersten Endes (6) hat, welches längs dreier definierter Krümmungslinien (15), 16, 18) gekrümmt ist, parallel zur transversalen Achse (B) und beabstandet voneinander, so dass gebildet werden:
ein erster Abschnitt (19), der längs einer ersten Krümmungslinie (15) gekrümmt ist, so dass sie auf einer im wesentlichen bezüglich der Longitudinalachse (A) geneigten Ebene positioniert ist; ein zweiter Abschnitt (20), der bezüglich des ersten Abschnitts (19) längs einer zweiten Krümmungslinie (16) so gekrümmt ist, dass er in einer Ebene positioniert ist, die im Wesentlichen parallel, aber nicht übereinstimmend mit der Ebene ist, in welcher der erste Abschnitt (19) liegt; bzw. ein dritter Abschnitt (21), der bezüglich des zweiten Abschnitts (20) längs einer dritten Krümmungslinie (18) so gekrümmt ist, dass er in einer Ebene liegt, welche einen Winkel (•) mit der Ebene bildet, in welcher der zweite Abschnitt (20) liegt.

3. Die Klemme wie in Anspruch 2 beansprucht, wobei die transversale Achse (B) parallel zu oder übereinstimmend mit der dritten Krümmmgslinie (18) ist, welche den dritten Abschnitt (21) mit dem zweiten Abschnitt (20) verbindet.

4. Die Klemme wie in Anspruch 2 oder 3 beansprucht, wobei der dritte Abschnitt (21) der zweiten Spannbacke (10) entspricht, welche in der Lage ist unter der Kraft, die durch die Mittel zur manuellen Regulierung der Verspannung (13) ausgeübt wird, um die transversale Achse (B) zwischen einer Ruhestellung, in welcher der Winkel (α) einen vorgegebenen Mindestwert einnimmt und einer Reihe von Verspannungsbetriebsstellungen, in welchen der Winkel (α) progressiv in Bezug auf den Mindestwert ansteigt bis er einen Verspannungswert erreicht, zu rotieren.

5. Die Klemme wie in einem der vorhergehenden Ansprüchen 2 bis 4 beansprucht, wobei die Mittel zur manuellen Einstellung der Verspannung (13) eine Stellschraube umfassen, deren Schaft in wenigstens eine von zwei koaxialen Durchgangsöffnungen (22) eingeschraubt ist, welche in dem ersten (19) und dem zweiten Abschnitt (20) erhalten wurden, um so dem Ende des Schraubenschafts zu ermöglichen, an einer Fläche des dritten Abschnittes (21) anzuliegen.

6. Die Klemme wie in einem der Ansprüche 2 bis 5 beansprucht, wobei der erste (19), zweite (20) und dritte Abschnitt (21) des zweiten Endes (14) so geformt sind, dass sie eine im Wesentlichen S-förmige Form haben.

7. Die Klemme wie in Anspruch 6 beansprucht, wobei die Krümmung (32), welche durch die abgewinkelte Bogenlinie geformt wird, welche der dritten Krümmungslinie (18) zwischen dem zweiten (20) und dem dritten Abschnitt (21) entspricht, an der unteren Fläche (23) der Grundplatte (5) anliegt.

8. Die Klemme wie in Anspruch 6 beansprucht, wobei die Krümmung (32), welche durch die abgewinkelte Bogenlinie geformt wird, welche der dritten Krümmungslinie (18) entspricht, zwischen dem zweiten (20) und dem dritten Abschnitt (21) so geformt ist, dass sie einen reduzierten Querschnitt darstellt in Bezug auf den Querschnitt des zweiten (20) und dritten Abschnitts (21), so dass sie einen Fortsatz (24) ausbilden, welcher winklig gekrümmt ist, der innerhalb eines Schlitzes (25) angeordnet ist, welcher in der Grundplatte (5) erhalten ist entlang derer er sich parallel zur Longitudinalachse (A) erstreckt.

9. Die Klemme wie in einem der vorhergehenden Ansprüche beansprucht, hergestellt aus Federstahl oder ähnlichen Materialien.

## Revendications

1. Pince (1) pour serrer ensemble deux composants (2a, 2b) d'un cadre de portes ou de fenêtres ou de cadres de tableau ; ladite pince (1) comportent :
- une plaque de base (5) qui s'étend le long d'un axe longitudinal (A) et qui possède une première extrémité (6) incurvée de façon à fonctionner comme une première mâchoire de serrage (7) pouvant, en utilisation, être placée à l'intérieur d'un siège (8) formé dans un premier composant (2a) dudit cadre ;
- une deuxième mâchoire de serrage (10), qui est couplée à la plaque de base (5) de sorte qu'elle puisse être tournée autour d'un axe (B) transversal audit axe longitudinal (A) et qu'elle puisse, en utilisation, être placée à l'intérieur d'un siège (11) formé dans un deuxième composant (2b) dudit cadre ;
et
- des moyens de réglage manuel de serrage (13) qui exercent une force sur ladite deuxième mâchoire de serrage (10) pour la faire tourner autour dudit axe transversal (B) de façon à rapprocher la deuxième mâchoire de serrage (10) de la première mâchoire de serrage (7) de façon commandée afin de serrer sélectivement le premier composant (2a) et le deuxième composant (2b) ensemble ;
ladite pince (1) étant **caractérisée en ce que** ladite première mâchoire de serrage (7) et ladite deuxième mâchoire de serrage (10) sont faites d'une seule pièce avec ladite plaque de base (5) de façon à former avec cette dernière une structure monolithique.

2. Pince selon la revendication 1, dans laquelle ladite plaque de base (5) possède une deuxième extrémité (14) opposée à ladite première extrémité (6) et incurvée le long de trois lignes d'incurvation distinctes (15, 16, 18) parallèles audit axe transversal (B) et espacées l'une de l'autre de façon à former respectivement : une première section (19) incurvée suivant une première ligne d'incurvation (15) de sorte qu'elle est placée dans un plan incliné par rapport audit axe longitudinal (A) ; une deuxième section (20) incurvée par rapport à la première section (19) suivant une deuxième ligne d'incurvation (16) de sorte qu'elle est placée dans un plan sensiblement parallèle au plan, sans coïncider avec celui-ci, dans lequel se trouve ladite première section (19); et une troisième section (21) incurvée par rapport à la deuxième section (20) suivant une troisième ligne d'incurvation (18) de façon à se trouver dans un plan qui forme un angle (•) avec le plan dans lequel se trouve ladite deuxième section (20).

3. Pince selon la revendication 2, dans laquelle l'axe transversal (B) est parallèle à ladite troisième ligne d'incurvation (18), sans coïncider avec celle-ci, qui relie la troisième section (21) à la deuxième section (20).

4. Pince selon les revendications 2 ou 3, dans laquelle la troisième section (21) correspond à la deuxième mâchoire de serrage (10), qui est apte à tourner, sous l'action de la force exercée par lesdits moyens de réglage manuel de serrage (13), autour dudit axe transversal (B), entre une position de repos, dans laquelle ledit angle (α) a une valeur prescrite minimale, et une série de positions de serrage fonctionnelles dans lesquelles ledit angle (α) augmente progressivement par rapport à la valeur minimale jusqu'à atteindre une valeur de serrage.

5. Pince selon l'une quelconque des revendications 2 à 4, dans laquelle lesdits moyens de réglage manuel de serrage (13) comportent une vis de réglage dont la tige est vissée à l'intérieur d'au moins un des deux trous traversants coaxiaux (22) ménagés dans la première section (19) et la deuxième section (20) de façon à permettre à l'extrémité de la tige de vis de venir en butée sur une face de la troisième section (21).

6. Pince selon l'une quelconque des revendications 2 à 5, dans laquelle la première section (19), la deuxième section (20) et la troisième section (21) de la deuxième extrémité (14) sont conformées de façon à avoir sensiblement une forme de S.

7. Pince selon la revendication 6, dans laquelle le coude (32) formé par la courbure angulaire correspondant à la troisième ligne d'incurvation (18) entre la deuxième section (20) et la troisième section (21) vient en butée sur la face inférieure (23) de la plaque de base (5).

8. Pince selon la revendication 6, dans laquelle le coude (32) formé par la courbure angulaire correspondant à la troisième ligne d'incurvation (18) entre la deuxième section (20) et la troisième section (21) est conformé de façon à présenter une largeur réduite par rapport à la largeur de la deuxième section (20) et de la troisième section (21) formant ainsi un appendice (24) incurvé suivant un angle, positionné à l'intérieur d'une fente (25) qui sont ménagée dans la plaque de base (5) et le long de laquelle il s'étend parallèlement à l'axe longitudinal (A).

9. Pince selon l'une quelconque des revendications précédentes, ladite pince étant fabriquée en acier à ressorts ou à partir de matériaux similaires.
